Europäisches Patentamt

European Patent Office

Office européen des brevets

(11) Numéro de publication: **0 342 119**
**A1**

# (12) DEMANDE DE BREVET EUROPEEN

(21) Numéro de dépôt: 89401288.9

(22) Date de dépôt: 09.05.89

(51) Int. Cl.⁴: **F 16 B 12/40**

(30) Priorité: 11.05.88 FR 8806392

(43) Date de publication de la demande:
15.11.89 Bulletin 89/46

(84) Etats contractants désignés:
BE CH DE ES FR GB IT LI NL

(71) Demandeur: **SOCIETE DE DESIGN ET D'AGENCEMENT**
**Z.I. du Cardonnoy**
**F-76390 Aumale (FR)**

(72) Inventeur: **Marot, Jacques**
**19, rue de la Challe Orange**
**F-95610 Eragny (FR)**

**Boue, Jean-Claude**
**6, rue de Verdun**
**F-76390 Aumale (FR)**

(74) Mandataire: **Martin, Jean-Jacques et al**
**Cabinet REGIMBEAU 26, Avenue Kléber**
**F-75116 Paris (FR)**

(54) **Dispositif d'assemblage pour éléments démontables ou modulaires.**

(57) L'invention concerne un dispositif d'assemblage pour éléments du type comportant une ossature et au moins une entretoise ou un panneau transversal à ladite ossature.

Conformément à l'invention, le dispositif comporte deux corps d'assemblage (100, 200) insérables dans un profilé creux constituant une partie de l'ossature, chaque corps d'assemblage comportant une portion centrale de verrouillage (101, 201) pouvant pénétrer dans un perçage du panneau à maintenir, ainsi qu'une portion périphérique (102, 202) pouvant prendre appui contre une face dudit panneau ; les portions centrales de verrouillage (101, 201) constituent une liaison d'accouplement baïonnette à rampe inclinée, ce qui permet, par rotation relative des deux corps d'asemblage, de déformer radialement vers l'extérieur lesdits corps et de les bloquer ainsi automatiquement dans le profilé creux associé.

Application notamment aux éléments d'ameublement permettant la réalisation de meubles en kit, pour des types variés d'éléments et/ou de profilés creux.

FIG.1

**Description**

## DISPOSITIF D'ASSEMBLAGE POUR ELEMENTS DEMONTABLES OU MODULAIRES

L'invention concerne l'assemblage d'éléments démontables ou modulaires, et en particulier d'éléments d'ameublement en vue de l'assemblage de meubles en kit.

Plus précisément, l'invention se rapporte à un dispositif d'assemblage pour éléments démontables ou modulaires, lesdits éléments étant du type comportant une ossature et au moins une entretoise maintenue par ladite ossature en étant disposée sensiblement transversalement à celle-ci.

Il existe déjà de nombreux systèmes visant à permettre un assemblage entre une ossature et des entretoises ou panneaux, pour générer divers éléments d'ameublement démontables ou modulaires.

Il y a tout d'abord les systèmes utilisant une douille et une vis en extrémité de deux montants disposés de part et d'autre d'un panneau : l'un des montants présente un épaulement supportant les efforts verticaux, et les deux montants prennent en sandwich ledit panneau, l'assemblage résultant en fait d'un simple vissage en faisant tourner plusieurs fois lesdits montants l'un par rapport à l'autre.

Plus généralement, il s'agit de systèmes basés sur le principe d'organes de raccordement collés ou soudés en extrémité des montants ou des cloisons. Ces systèmes vont des techniques très simples utilisant des vis dont la tête est intégrée dans le panneau vissé (vis BTR), à des systèmes plus complexes utilisant un taquet de verrouillage du type excentrique (le taquet, mobile autour d'un axe parallèle à celui de la cloison, peut être tourné avec un outil pour que son bord vienne se loger dans la gorge ménagée à cet effet dans un organe de raccordement rapporté en extrémité de montant).

On peut citer aussi les systèmes à embouts filetés rapportés en extrémité des montants constituant une partie d'ossature verticale, tel que le système décrit dans le certificat d'utilité français N° 2 557 783.

Ces différentes techniques présentent cependant plusieurs inconvénients.

Ils sont en général limités à des ossatures de section ronde, car le positionnement relatif des montants successifs (par rapport à leur axe) est très difficile à contrôler (la rotation relative en cas de vissage implique toujours une erreur angulaire de positionnement une fois l'assemblage réalisé, ce qui est défavorable pour l'esthétique de l'élément d'ameublement terminé).

De plus, l'assemblage requiert la plupart du temps l'utilisation d'un outil spécifique, à l'exception il est vrai des tubes comportant des embouts et vis rapportés et se vissant à travers une tablette en bois (cette dernière technique reste cependant onéreuse, et peu fiable).

On peut également citer le brevet américain N° 3 338 605 dans lequel est décrite une structure de support permettant de réaliser des éléments de rangement, des tables ou des cloisons de séparation.

La structure décrite dans ce brevet américain est essentiellement constituée par un raccord formé de trois éléments mutuellement verrouillables, ce raccord pouvant serrer le rebord d'une paroi insérée dans une encoche latérale dudit raccord. Le serrage est obtenu par coopération entre une rampe et un ergot prévus sur deux des trois éléments : il est alors nécessaire de prévoir des cannelures et rainures pour réaliser un double blocage anti-rotation, afin de verrouiller ensemble les trois éléments.

Une telle structure ne requiert aucun outil particulier, mais elle est complexe, et reste limitée à un mode d'assemblage bout à bout, avec des raccordements par encliquetage.

L'état de la technique est également illustré par le brevet anglais N° 1 402 925, les brevets américains N° 3 869 218, N° 3 661 411 et N° 3 890 022, et par le modèle d'utilité allemand N° 84 30 322.

Les différents systèmes développés pour l'assemblage entre panneau et cloisons sont finalement peu adaptés pour permettre un assemblage satisfaisants entre les profils d'une ossature. De toute façon, ces systèmes ne visent pas à préserver une parfaite coaxialité des profils, ce qui est pourtant essentiel si l'on s'intéresse à des éléments d'ameublement destinés à supporter des charges importantes.

Ceci explique sans doute la réticence des constructeurs à séparer un montant porteur vertical en plusieurs sous-ensembles, car ils connaissent bien les risques de détérioration qu'entraîne l'application de tels éléments d'ameublement à des charges importantes, lesquelles sont en général assez mal réparties. Une conséquence particulière est que les colis préparés à l'avance pour que l'acheteur réalise ensuite lui-même l'assemblage du meuble en kit, présentent au moins une longueur correspondant à celle d'un montant monobloc complet (par exemple 1 650 mm pour un meuble bureau de 1 650 mm de hauteur, ou 1 700 mm pour un ensemble commode de 1 700 mm de hauteur) : or, il est bien connu dans ce domaine que l'encombrement des colis constitue un paramètre très important.

L'invention a pour objet de réaliser un dispositif d'assemblage ne présentant pas les inconvénients qui viennent d'être mentionnés, tout en restant de conception simple et coût de production raisonnable.

L'invention a également pour objet de réaliser un dispositif d'assemblage permettant un assemblage aisé et rapide, en particulier n'exigeant pas le moindre outil pour le montage ou le démontage des éléments concernés.

L'invention a aussi pour objet de réaliser un dispositif d'assemblage qui soit compatible avec des types très variés de profils sans que cela complique l'assemblage, tout en étant assuré de conserver un parfait alignement desdits profils, et ce tant pour l'alignement vertical (qui est essentiel pour la bonne reprise des efforts verticaux) que pour le positionnement angulaire (qui est important pour l'esthétique de l'élément d'ameublement assemblé).

L'invention a enfin pour objet de réaliser un dispositif d'assemblage qui reste totalement invisible une fois l'assemblage terminé, ce qui préserve parfaitement l'esthétique finale du système assemblé.

Il s'agit plus particulièrement d'un dispositif d'assemblage pour éléments démontables ou modulaires, lesdits éléments étant du type comportant une ossature et au moins une entretoise maintenue par ladite ossature en étant disposée sensiblement transversalement à celle-ci, caractérisé par le fait qu'il comporte d'une part un premier corps d'assemblage insérable dans un profilé creux constituant une partie de l'ossature, ledit premier corps d'assemblage comprenant une portion centrale de verrouillage pouvant pénétrer dans un perçage associé de l'entretoise, ainsi qu'une portion périphérique se raccordant à cette portion centrale et présentant un bord libre pouvant prendre appui contre une face de ladite entretoise, dans une zone entourant le perçage prévu sur celle-ci, et d'autre part un second corps d'assemblage pouvant prendre appui contre la face opposée de l'entretoise, ledit second corps d'assemblage présentant une portion centrale de verrouillage homologue de celle du premier corps d'assemblage et pouvant pénétrer également dans ledit perçage pour constituer une liaison d'accouplement baïonnette à rampe inclinée, la portion périphérique du premier corps d'assemblage étant en outre déformable radialement vers l'extérieur sous l'effet d'une traction exercée sur la portion centrale dudit premier corps d'assemblage, de telle sorte que la rotation relative des deux corps d'assemblage en vue de leur accouplement réalise une telle traction et bloque ainsi automatiquement le premier corps d'assemblage dans le profilé creux associé.

Il est intéressant de prévoir que la portion périphérique du premier corps d'assemblage comporte des facettes parallèles correspondant à certaines au moins des faces internes du profilé creux associé, lesdites facettes se raccordant par une face centrale commune à la portion centrale de verrouillage dudit corps ; cela sera par exemple le cas pour des sections transversales polygonales, en particulier carrées ou rectangulaires.

Il est avantageux que le premier corps d'assemblage présente des fentes facilitant sa déformation radiale sous l'effet d'une traction exercée sur la portion centrale de verrouillage dudit corps. En particulier, les fentes sont prévues au niveau d'arêtes de la portion périphérique du corps d'assemblage, et se prolongent dans la face centrale commune dudit corps ; plus précisément, les fentes pourront être organisées selon des plans diagonaux, parallèles à une direction commune qui correspond à l'axe central du profilé creux associé.

Selon une caractéristique particulièrement intéressante de l'invention, la portion centrale de verrouillage du premier corps d'assemblage a sensiblement la forme d'une cheminée cylindrique se terminant par un moyen mâle ou femelle d'accouplement baïonnette à rampe inclinée.

Dans un premier cas, le moyen mâle d'accouplement comporte une tête transversale saillante, ladite tête transversale comportant au moins une facette inférieure inclinée pouvant coopérer avec une rampe inclinée prévue sur la portion centrale de verrouillage homologue.

Dans un deuxième cas, le moyen femelle d'accouplement comporte au moins une rampe inclinée disposée à l'intérieur de la cheminée, ladite rampe pouvant coopérer avec la tête transversale saillante prévue sur la portion centrale de verrouillage homologue. De préférence, la rampe inclinée est délimitée par deux ergots d'encliquetage ; en particulier, la rampe inclinée est essentiellement plane, et s'étend perpendiculairement à une facette d'entrée délimitant un orifice prévu pour l'entrée de la tête transvesale saillante de la portion centrale homologue. Dans une variante préférée pour des raisons de fiabilité, le moyen femelle d'accouplement comporte deux rampes inclinées se correspondant dans une symétrie par rapport à l'axe de la cheminée.

Selon une caractéristique particulièrement avantageuse, la liaison d'accouplement baïonnette à rampe inclinée est effective après une rotation relative d'environ un quart de tour des deux corps d'assemblage : il est d'ores et déjà aisé de voir combien un tel système est rapide et aisé par rapport aux systèmes vissés exigeant d'imprimer une rotation relative de plusieurs tours aux profils concernés.

De préférence, les moyens mâle et femelle d'accouplement baïonnette à rampe inclinée sont en outre complétés par un moyen d'encliquetage rapide permettant un verrouillage provisoire par clipsage axial des deux corps d'assemblage avant la rotation relative desdits corps ; en particulier, le moyen d'encliquetage rapide est un système à picot et cuvette, avec de préférence deux picots sur la tête transversale saillante du moyen mâle d'accouplement et deux cuvettes sur la paroi intérieure de la cheminée portant le moyen femelle d'accouplement.

Selon un mode de réalisation particulièrement avantageux, les premier et second corps d'assemblage sont de structure générale identique, et ne diffèrent essentiellement l'un de l'autre que par le moyen d'accouplement baïonnette à rampe inclinée ; en particulier, les deux corps d'assemblage comportent une portion périphérique choisie de telle façon que l'on puisse utiliser un profilé creux identique de part et d'autre de l'entretoise ou du panneau concerné, par exemple une portion périphérique de section transversale sensiblement carrée ou rectangulaire. En variante, lorsque le dispositif d'assemblage est associé à un profilé présentant intérieurement des réservations angulaires, la portion périphérique des corps d'assemblage présente une section transversale complémentaire, avec des saillies angulaires correspondantes.

Selon un autre mode de réalisation avantageux, le second corps d'assemblage se présente sous la forme d'un bouchon cylindrique, dont la partie principale constitue la portion centrale de verrouillage se terminant par un moyen mâle ou femelle d'accouplement baïonnette à rampe inclinée, la partie restante étant essentiellement indéformable, et constituant à la fois un appui et un cache masquant la liaison d'accouplement à baïonnette. Cela sera par exemple le cas pour l'extrémité supérieure d'une ossature verticale, dont on veut préserver l'esthétique sans que cela soit au détriment de la fiabilité de l'assemblage.

Il est enfin avantageux de faire en sorte que chacun des corps soit constitué par une pièce unique en matière plastique, de préférence moulée par injection : on parvient ainsi à un coût de production très satisfaisant, même pour des formes compliquées (comme c'est le cas pour la variante précitée à saillies angulaires).

D'autres caractéristiques et avantages de l'invention apparaîtront plus clairement à la lumière de la description qui va suivre et des dessins annexés, concernant un mode de réalisation particulier, en référence aux figures où :

- la figure 1 est une vue en perspective, illustrant deux corps d'assemblage constituant un dispositif d'assemblage conforme à l'invention, les arrachements permettant de mieux distinguer leur structure, en particulier pour le moyen femelle d'accouplement baïonnette à rampe inclinée ;

- la figure 2A est une vue en coupe axiale des deux corps de la figure 1 (le corps d'assemblage à moyen mâle d'accouplement baïonnette est cependant ici au-dessus du corps à moyen femelle) ;

- la figure 2B est une vue en coupe axiale analogue, mais selon un plan de coupe orthogonal à celui de la coupe précédente ;

- la figure 3 est une vue de dessus de ces mêmes corps (les figures 2A et 2B sont des coupes selon A-A et B-B de la figure 3) ;

- la figure 4 est une coupe axiale du dispositif de l'invention, associé à deux profilés creux de chaque côté du panneau à maintenir (le dispositif est ici en position d'assemblage final, avec une liaison d'accouplement baïonnette effective entre les deux corps d'assemblage) ;

- la figure 5 est une vue éclatée illustrant un exemple d'organisation verticale pour les éléments constitutifs d'un élément d'ameublement à roulettes à deux tablettes horizontales (on notera en partie supérieure la réalisation sous forme de bouchon pour l'un des corps d'assemblage, alors que les deux corps sont sensiblement identiques pour le panneau inférieur contre lequel s'appuient deux profilés creux de section ici carrée) ;

- la figure 6 est une coupe transversale d'un autre profilé creux (profilé présentant intérieurement des réservations angulaires, et extérieurement des rainures en T pour la feuillure d'une paroi, ou un taquet de positionnement, ou encore pour un jonc décoratif inséré), dans lequel est inséré un corps d'assemblage complémentaire à saillies angulaires, favorisant la répartition des efforts de serrage et évitant également de comprimer les fonds de gorges ;

- les figures 7A et 7B illustrent deux exemples de réalisation d'éléments d'ameublement pouvant être aisément assemblés grâce au dispositif de l'invention, ce dispositif intervenant au niveau de toutes les tablettes horizontales.

Le dispositif d'assemblage qui va être décrit permet le montage ou le démontage rapide d'éléments démontables ou modulaires de types très variés, ces éléments concernant ici le domaine de l'ameublement, et comportant en principe une ossature, et au moins une entretoise maintenue par ladite ossature en étant disposée sensiblement transversalement à celle-ci. Dans le cadre de l'application à l'ameublement, l'entretoise se présente généralement sous la forme d'un panneau ou d'une étagère. Il va de soi cependant que d'autres applications peuvent être envisagées, notamment la réalisation de structures de stands, présentoirs, etc..., dans lesquelles l'entretoise peut se ramener à une simple rondelle d'appui.

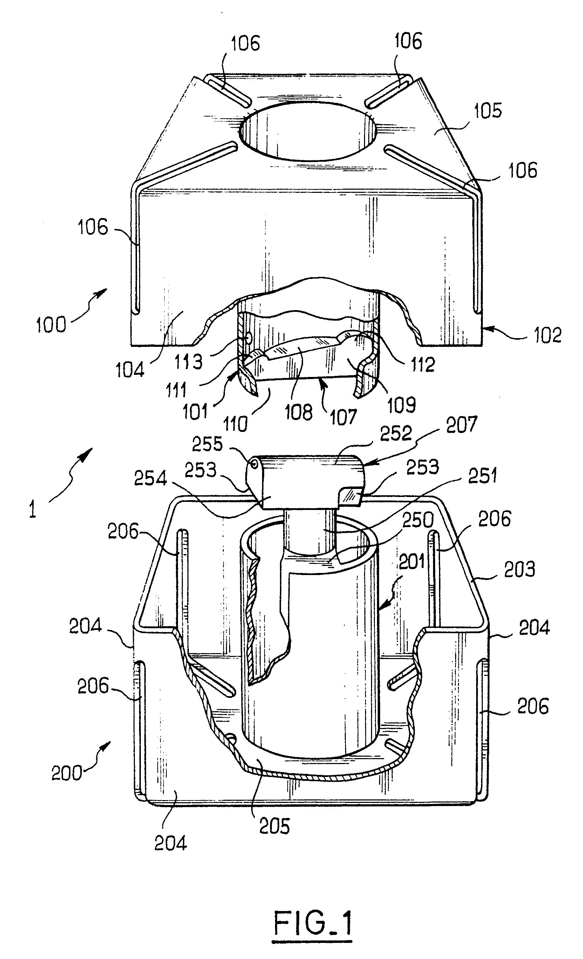

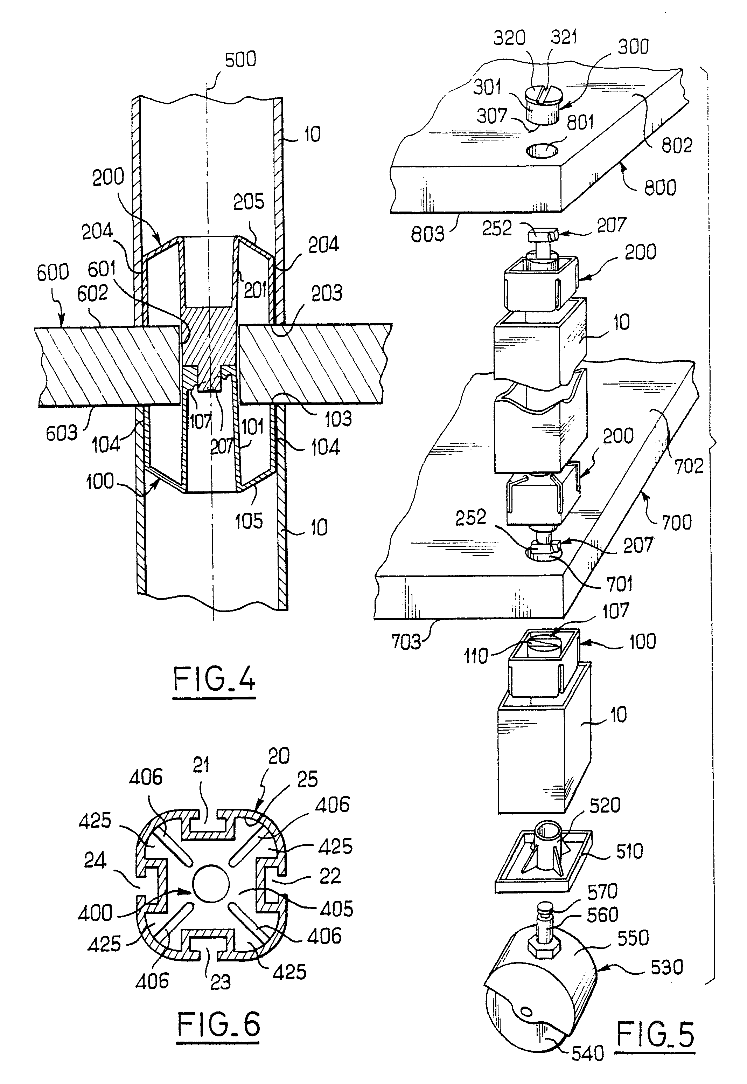

Le dispositif d'assemblage de l'invention est essentiellement constitué par un premier corps d'assemblage insérable dans un profilé creux constituant une partie de l'ossature, auquel est associé un second corps d'assemblage de façon à définir une liaison d'accouplement baïonnette à rampe inclinée, de telle sorte que la rotation relative de ces deux corps d'assemblage en vue de leur accouplement bloque automatiquement le premier corps d'assemblage dans le profilé creux associé. Dans le mode de réalisation qui va être décrit en détail en regard des figures 1 à 4, les premier et second corps d'assemblage sont de structure générale presque identique, et ne diffèrent en fait l'un de l'autre que par le moyen mâle ou femelle d'accouplement baïonnette à rampe inclinée. Il existe naturellement d'autres variantes possibles, en particulier une variante dans laquelle le second corps d'assemblage se présente sous la forme d'un bouchon cylindrique comportant un moyen mâle ou femelle d'accouplement baïonnette à rampe inclinée, ainsi que cela sera décrit en regard de la figure 5.

Le dispositif d'assemblage 1 illustré aux figures 1 à 3 comporte un premier corps d'assemblage 100 et un deuxième corps d'assemblage homologue 200. Ainsi qu'on va le voir, les corps d'assemblage 100 et 200 diffèrent seulement par leur portion centrale de verrouillage, de sorte que les parties du second corps d'assemblage 200 qui correspondent à celles du premier corps d'assemblage 100 porteront la même référence augmentée du nombre cent.

Le premier corps d'assemblage 100 comporte une portion centrale de verrouillage 101 et une portion périphérique 102 se raccordant à cette portion centrale. La portion périphérique 102 est constituée par un bord libre 103 auquel aboutissent des facettes parallèles 104 correspondant à certaines au moins des faces internes du profilé creux associé ; ces facettes parallèles se raccordent par une face centrale commune 105 à la portion centrale de verrouillage 101 du corps d'assemblage.

La portion centrale de verrouillage 101 peut pénétrer dans un perçage associé du panneau à maintenir, tandis que le bord libre 103 peut prendre appui contre une face dudit panneau, dans une zone entourant le perçage prévu sur celui-ci. Conformément à une caractéristique essentielle du dispositif de l'invention, la portion périphérique 102 du premier corps d'assemblage 100 est déformable radialement vers l'extérieur sous l'effet d'une traction exercée sur la portion centrale 101 dudit corps d'assemblage, dans une direction axiale : de ce fait, si le corps d'assemblage 100 est inséré dans un profilé creux associé, et que le corps d'assemblage présente une portion périphérique à section transversale homologue de celle dudit profilé, les facettes parallèles 104 sont adjacentes aux faces internes du profilé creux avec possibilité de coulissement, sauf si une traction est exercée sur la portion centrale de verrouillage 101, cette traction ayant pour effet de déformer le corps d'assemblage, la déformation élastique concernant en fait la portion périphérique 102 de ce corps en raison de la butée positive du bord libre 103 dudit corps. Cette déformation radiale vers l'extérieur, ou expansion, a pour conséquence d'appliquer fermement chacune des facettes parallèles 104 contre la face interne du profilé creux correspondante, ce qui assure un blocage parfait réalisé ainsi aisément et automatiquement, sans l'aide d'un quelconque outil.

Il est avantageux de prévoir que le premier corps d'assemblage 100 présente des fentes 106 facilitant sa déformation radiale sous l'effet d'une traction exercée sur la portion centrale de verrouillage 101 dudit corps. Les fentes 106 sont ici prévues au niveau d'arêtes de la portion périphérique 102 du corps d'assemblage, et se prolongent dans la face centrale commune 105 dudit corps. Une telle configuration est avantageuse, dans la mesure où elle laisse subsister une bande inférieure continue adjacente au bord libre 103 de la portion périphérique 102, ce qui préserve la tenue mécanique de l'ensemble lors de la déformation radiale de la portion périphérique. On notera également que les fentes 106 sont organisées selon des plans diagonaux parallèles à une direction commune, qui correspond en fait à l'axe central du profilé creux associé. Il va de soi qu'une certaine symétrie est avantageuse, dans la mesure où la déformation radiale de la portion périphérique du corps d'assemblage est réalisée de la même manière pour chacune des facettes latérales dudit corps : le caractère isotrope d'une telle déformation favorise le centrage du profilé creux par rapport à l'axe de la portion centrale de verrouillage 101, et de ce fait l'alignement relatif de deux profilés adjacents de part et d'autre du panneau maintenu.

La portion centrale de verrouillage 101 du premier corps d'assemblage 100 a ici sensiblement la forme d'une cheminée cylindrique se terminant par un moyen (ici femelle) d'accouplement baïonnette à rampe inclinée. La cheminée cylindrique se raccorde directement à la face centrale commune 105, ce raccordement constituant le point d'accrochage qui permet de déformer radialement vers l'extérieur la portion périphérique du corps sous l'effet d'une traction exercée sur la portion centrale 101. L'arrachement de l'extrémité de la cheminée cylindrique permet de mieux distinguer la structure précise du moyen d'accouplement baïonnette à rampe inclinée (la partie arrachée est identique à celle qui est visible ici, en se correspondant dans une symétrie axiale par rapport à l'axe de la cheminée cylindrique). Le moyen femelle d'accouplement, désigné sous la référence générale 107, comporte au moins une rampe inclinée 108 disposée à l'intérieur de la cheminée 101, ladite rampe étant destinée à coopérer avec la tête saillante prévue sur la portion centrale de verrouillage homologue de l'autre corps d'assemblage. La rampe inclinée 108 est ici essentiellement plane, et s'étend perpendiculairement à une facette d'entrée 109 délimitant un orifice 110 prévu pour l'entrée de la tête saillante de la portion centrale homologue. On distingue également deux ergots d'encliquetage 111 et 112 dont la fonction sera décrite plus loin. Dans la pratique, on prévoira de préférence deux rampes inclinées 108 se correspondant dans une symétrie axiale par rapport à l'axe de la cheminée cylindrique.

On va maintenant décrire la structure du second corps d'assemblage 200, et en particulier le moyen mâle d'accouplement permettant, avec le moyen femelle qui vient d'être décrit, de définir une liaison baïonnette à rampe inclinée.

Le corps d'assemblage 200 comporte, comme le premier corps d'assemblage 100, une portion centrale de verrouillage 201, une portion périphérique 202 se raccordant a cette portion centrale et présentant un bord libre 203 ; la portion périphérique 202 comporte des facettes parallèles 204 se raccordant par une face centrale commune 205 à la portion centrale de verrouillage dudit corps. On distingue également des fentes 206 destinées à faciliter la déformation radiale du corps d'assemblage 200 sous l'effet d'une traction exercée sur la portion centrale de verrouillage 201 de celui-ci. Comme précédemment, les fentes 206 sont prévues au niveau d'arêtes de la portion périphérique 202 du corps d'assemblage, et se prolongent dans la face centrale commune 205 dudit corps, et ces fentes sont organisées selon des plans diagonaux parallèles à une direction commune, qui correspond à l'axe central du profilé creux associé à ce corps d'assemblage. La portion centrale de verrouillage 201 se présente également sous la forme d'une cheminée creuse comme pour la portion centrale de l'autre corps d'assemblage, mais celle-ci se termine maintenant par un moyen mâle d'accouplement 207. On distingue ainsi à partir de la portion centrale 250 de la cheminée cylindrique 202, un appendice cylindrique coaxial 251, saillant au-delà du plan du rebord 203. Cet appendice 251 porte une tête transversale saillante 252 dont la section générale (selon un plan perpendiculaire à l'axe de la cheminée) correspond sensiblement à la section transversale de l'orifice d'entrée 110 prévu sur la portion centrale homologue 101 du corps d'assemblage 100. La tête transversale saillante 252 présente de préférence un bord supérieur arrondi se raccordant à deux faces latérales 254, lesdites faces venant au contact des facettes d'entrée 109 délimitant l'orifice 110 précité. Il est par ailleurs avantageux de prévoir que la tête transversale 252 comporte au moins une facette inférieure inclinée 253 pouvant coopérer avec la rampe inclinée 108 prévue sur la portion centrale de verrouillage homologue 101. Pour correspondre aux deux rampes inclinées 108 prévues sur le corps d'assemblage 100, il sera naturellement prévu de disposer deux facettes inférieures inclinées 253 se correspondant dans une symétrie axiale par rapport à l'axe de la cheminée 201. L'inclinaison de ces facettes 253 correspondra naturellement à la pente des rampes inclinées 108 associées. Les moyens 107, 207 d'accouplement baïonnette à rampe inclinée fonctionnent comme suit : une fois que la tête transversale saillante 252 a pénétré suffisamment profondément dans l'orifice 110, une rotation relative des corps d'assemblage 100 et 200 amène chaque facette inférieure inclinée 253 contre le premier ergot d'encliquetage 111 ; en poursuivant la rotation, les facettes 253 franchissent cet ergot 111, puis viennent reposer contre la rampe inclinée 108 associée, le deuxième ergot 112 constituant alors une butée évitant toute poursuite du mouvement relatif de rotation desdits corps. On constate ainsi que la liaison d'accouplement baïonnette à rampe inclinée selon l'invention est effective après une rotation relative d'environ un quart de tour des deux corps d'assemblage 100, 200 : ceci montre combien le système de l'invention est rapide et aisé par rapport aux systèmes utilisés exigeant d'imprimer une rotation relative de plusieurs tours aux profilés concernés comportant des inserts rapportés en vue d'une liaison par vissage.

Il est par ailleurs avantageux de prévoir que les moyens mâle 207 et femelle 107 d'accouplement baïonnette à rampe inclinée soient en outre complétés par un moyen d'encliquetage rapide permettant un verrouillage provisoire par clipsage axial des deux corps d'assemblage 100, 200 avant la rotation relative desdits corps. On a illustré ici un exemple possible d'un tel moyen d'encliquetage rapide, selon un système à picots et cuvettes : on trouve ainsi deux picots 255 sur la tête transversale saillante 252 du moyen mâle d'accouplement 207, et deux cuvettes 113 homologues sur la paroi intérieure de la cheminée 101 portant le moyen femelle d'accouplement 107. Sur la figure 1, la position de la cuvette 113 a été volontairement décalée pour la rendre visible, celle-ci étant en fait située au niveau d'une partie arrachée de la cheminée 101. Ainsi, le simple rapprochement des deux corps d'assemblage 100, 200, avec insertion de la tête transversale saillante 252 dans l'orifice 110, permet déjà un verrouillage provisoire par clipsage axial des deux corps : les dimensions des parties constitutives de ces corps d'assemblage seront naturellement choisies de telle sorte que chacun de ces corps soit au contact d'une face du panneau à maintenir lorsque le verrouillage provisoire desdits corps par clipsage axial intervient, de sorte que la rotation relative de ces corps n'ait à rattraper qu'un léger jeu, pour assurer essentiellement la déformation radiale vers l'extérieur de la portion périphérique de ces corps.

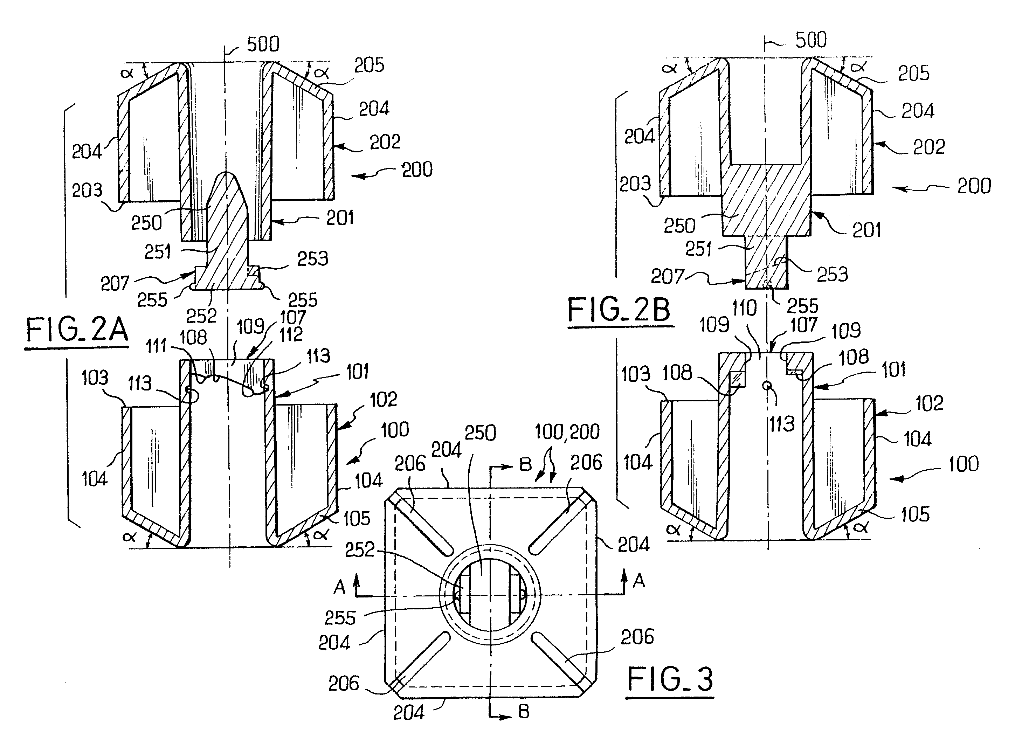

Les coupes des figures 2A et 2B, ainsi que la vue de la figure 3, vont permettre de mieux comprendre la structure précise des corps d'assemblage 100, 200. On notera que chacun des corps d'assemblage 100, 200 est ici constitué par une pièce unique, qui sera de préférence réalisée en matière plastique, et moulée par injection. Les coupes des figures 2A et 2B permettent notamment de constater que les faces centrales communes 105 et 205 des corps d'assemblage 100 et 200 définissent un angle par rapport à un plan perpendiculaire à l'axe commun 500 des corps d'assemblage. L'homme de l'art comprendra aisément qu'un tel angle est avantageux pour une réalisation optimale de la déformation latérale vers l'extérieur de la portion périphérique des corps d'assemblage : cet angle sera de préférence choisi voisin de 30° pour des corps d'assemblage présentant une épaisseur de l'ordre d'un millimètre. Sur ces figures, on distingue ainsi nettement la structure des éléments constitutifs de chacun des corps d'assemblage, lesquels éléments constitutifs sont ci-après rappelés pour mémoire. Le corps d'assemblage 100 comporte une portion centrale de verrouillage 101, une portion périphérique 102 se raccordant à cette portion centrale et présentant un bord libre 103, des facettes parallèles 104 se raccordant par une face centrale commune 105 à la portion centrale de verrouillage 101, et des fentes 106 facilitant la déformation radiale du corps sous l'effet d'une traction exercée sur la portion centrale de verrouillage 101 dudit corps. On trouve également un moyen femelle 107 d'accouplement baïonnette à rampe inclinée, avec deux rampes inclinées 108 s'étendant perpendiculairement à une facette d'entrée 109 délimitant un orifice 110, chaque rampe inclinée 108 étant délimitée par deux ergots d'encliquetage 111, 112. On trouve enfin sur le corps d'assemblage 100 deux cuvettes 113 servant à l'encliquetage rapide par clipsage axial des deux corps d'assemblage 100, 200. De la même façon, le corps d'assemblage 200 comporte une portion centrale de verrouillage 201, une portion pérphérique 202 se raccordant à cette portion centrale et présentant un bord libre 203, des facettes parallèles 204 se raccordant par une face centrale commune 205 à la portion centrale de verrouillage 201 du corps d'assemblage, et des fentes 206 facilitant la déformation radiale dudit corps. On distingue également un moyen mâle 207 d'accouplement baïonnette à rampe inclinée, avec une tête transversale saillante 252 présentant deux facettes inférieures inclinées 253, ainsi que deux picots 255 pour l'encliquetage rapide par clipsage axial.

La coupe axiale de la figure 4 va permettre de bien faire comprendre le mode d'assemblage obtenu à l'aide du dispositif de l'invention, lequel est associé à deux profilés creux de chaque côté d'un panneau à maintenir.

On distingue ainsi un panneau 600 comportant un perçage 601 dans lequel peuvent pénétrer les portions centrales de verrouillage des deux corps d'assemblage concernés ; les deux faces du panneau, dites supérieure et inférieure, sont respectivement référencées 602 et 603. On reconnaît sur la coupe deux corps d'assemblage 100 et 200 conformes à ceux déjà décrits, de sorte que l'on ne reprendra que les références principales pour ne pas charger inutilement la figure.

Lorsque l'on souhaite réaliser un assemblage, on présente deux corps d'assemblage 100, 200, que l'on dispose de part et d'autre du panneau 600, puis on introduit la portion centrale de verrouillage 101, 201, de ces deux corps dans le perçage 601 dudit panneau, ce qui permet de réaliser un verrouillage provisoire par clipsage axial des deux corps. Dans cette position de verrouillage, les bords 103 et 203 des corps d'assemblage 100 et 200 sont respectivement au contact (à un jeu de fabrication près) des faces 603 et 602 du panneau 600 à maintenir. Il suffit alors de disposer un profilé creux 10 sur chacun des corps d'assemblage, puis d'imprimer une rotation relative à ces deux profilés, ce qui induit une rotation relative des deux corps d'assemblage et réalise alors la liaison d'accouplement baïonnette à rampe inclinée entre les portions centrales de verrouillage 101, 201. Ainsi que cela a été expliqué précédemment, par l'effet de butée des bords 103, 203, la traction exercée sur les portions centrales 101, 201 produit une déformation radiale vers l'extérieur de chacun des corps d'assemblage, et bloque ainsi automatiquement chacun de ces corps dans le profilé creux associé. Ce processus est extrêmement simple, puisqu'il suffit d'exercer une rotation d'un quart de tour entre les deux profilés, sans que soit requis le moindre outil extérieur. Lorsque l'on veut démonter l'assemblage ainsi réalisé, il suffit d'imprimer une rotation en sens inverse aux deux profilés 10 concernés, puis de dégager ensuite les deux corps d'assemblage dont l'accès est devenu possible après enlèvement des profilés creux.

La figure 5 permet d'illustrer l'organisation verticale de différents éléments constitutifs d'un élément d'ameublement à roulettes, comportant deux tablettes horizontales, et utilisant plusieurs dispositifs d'assemblage conformes à l'invention. Cette organisation permet en particulier d'illustrer une variante possible de l'invention, selon laquelle un corps d'assemblage ici référencé 300 se présente sous la forme d'un bouchon cylindrique, dont la partie principale 301 constitue la portion centrale de verrouillage se terminant par un moyen mâle ou femelle 307 d'accouplement baïonnette à rampe inclinée (non visible sur la figure 5), la partie restante 320 étant essentiellement indéformable, et constituant à la fois un appui de butée et un cache masquant la liaison d'accouplement baïonnette. La partie supérieure du corps d'assemblage en forme de bouchon présente un moyen permettant un blocage en rotation, par exemple une rainure 321. Il sera en général préférable de prévoir un moyen d'accouplement baïonnette à rampe inclinée du type femelle sur un tel corps d'assemblage en forme de bouchon cylindrique. Le processus d'assemblage est tout à fait analogue à celui déjà décrit en regard de la figure 4. En effet, pour la tablette supérieure 800 comportant un perçage 801 et des faces 802 et 803, il suffit de rapprocher un bouchon 300 et un corps d'assemblage 200 comportant des moyens d'accouplement baïonnette à rampe inclinée homologues : après le verrouillage provisoire par clipsage axial, on met en place un profilé creux 10 sur le corps de verrouillage 200, puis on imprime une rotation relative entre le bouchon 300 et ledit corps d'assemblage 200 pour réaliser automatiquement un blocage entre le profilé creux et le corps d'assemblage inséré dans celui-ci, et ce avec une rotation d'un quart de tour seulement. Pour la tablette inférieure 700, comportant un perçage 701 et des faces 702, 703, on procède exactement comme indiqué en figure 4, à l'aide de deux corps d'assemblage 100, 200 comportant des moyens d'accouplement baïonnette à rampe inclinée : après clipsage axial des deux corps d'assemblage 100, 200, on met en place les profilés creux 10 correspondants, puis on imprime une rotation relative d'un quart de tour entre ces deux profilés pour un blocage parfait de part et d'autre de la tablette 700. En partie inférieure, on trouve des organes classiques dans ce domaine, permettant de fixer des moyens de roulement : il s'agit ici d'un bouchon inférieur 510 et d'un moyen de roulement 530 avec roulettes 540 et carter 550, ledit carter étant surmonté d'une tige 560 présentant une gorge 570 pour la liaison au bouchon 510 au moyen d'un bourrelet saillant de clipsage associé (non représenté ici).

Il va de soi que de nombreuses variantes sont possibles, en particulier pour une adaptation à des types très divers de profilés creux. La coupe de la figure 6 illustre ainsi un profilé creux 20 d'un autre type, présentant extérieurement des rainures en T 21, 22, 23, 24, et intérieurement des réservations angulaires 25. De tels profilés sont intéressants, car les rainures extérieures qu'ils comportent permettent d'insérer des taquets de support, ou de recevoir la feuillure d'une paroi, ou encore d'insérer une bande décorative. L'utilisation de tels profilés creux ne pose aucun problème dans le cadre de l'invention : on pourrait utiliser des corps d'assemblage tels que ceux décrits à la figure 1, mais il est préférable de réaliser des corps d'assemblage dans la section transversale de celle du profilé creux, ce qui permet de mieux répartir les efforts de serrage tout en évitant de comprimer les fonds de gorges. On distingue ainsi sur la figure 6 un corps d'assemblage 400, dont la portion périphérique présente une section transversale complémentaire, avec des saillies angulaires 425 correspondant aux réservations angulaires 25 du profilé creux 20. Comme précédemment, il sera avantageusement prévu des fentes 406 organisées selon des plans diagonaux, parallèles à une direction commune qui correspond à l'axe central du profilé creux associé 20.

Plus généralement, l'invention pourra permettre de résoudre les problèmes d'assemblage avec des profilés creux de types très divers, de préférence à section transversale de forme polygonale, et ce quelle que soit la matière utilisée pour réaliser lesdits profilés : il sera cependant opportun de choisir une section transversale des corps d'assemblage aussi complémentaire que possible de la section intérieure des profilés creux, de façon à répartir les efforts de serrage, et à éviter de comprimer les fonds de gorges lorsque les profilés en sont munis (comme c'est le cas pour la figure 6). Dans le cas de profilés creux de section extérieure ronde, il conviendra de ménager des facettes définissant un profil polygonal à l'intérieur dudit profilé (ceci peut aussi être obtenu en disposant un insert rapporté en extrémité du profilé).

L'invention permet ainsi de réaliser un dispositif d'assemblage de conception simple, et de coût de production raisonnable. Le dispositif d'assemblage permet un assemblage aisé et rapide, en particulier n'exigeant par le moindre outil pour le montage ou le démontage des éléments d'ameublement concernés ; tout au plus sera-t-il nécessaire d'utiliser un moyen de blocage dans le cas particulier où un corps d'assemblage est réalisé sous forme de bouchon (cas de la figure 5). Il est important de constater que le dispositif de l'invention permet de conserver un parfait alignement relatif des profilés creux, et ce tant pour l'alignement longitudinal qui est essentiel pour la bonne reprise des efforts verticaux, que pour le positionnement angulaire qui peut s'avérer important pour l'esthétique des éléments d'ameublement assemblés. D'ailleurs, pour ce qui est de l'esthétique, il convient de noter que le dispositif d'assemblage reste totalement invisible une fois l'assemblage terminé.

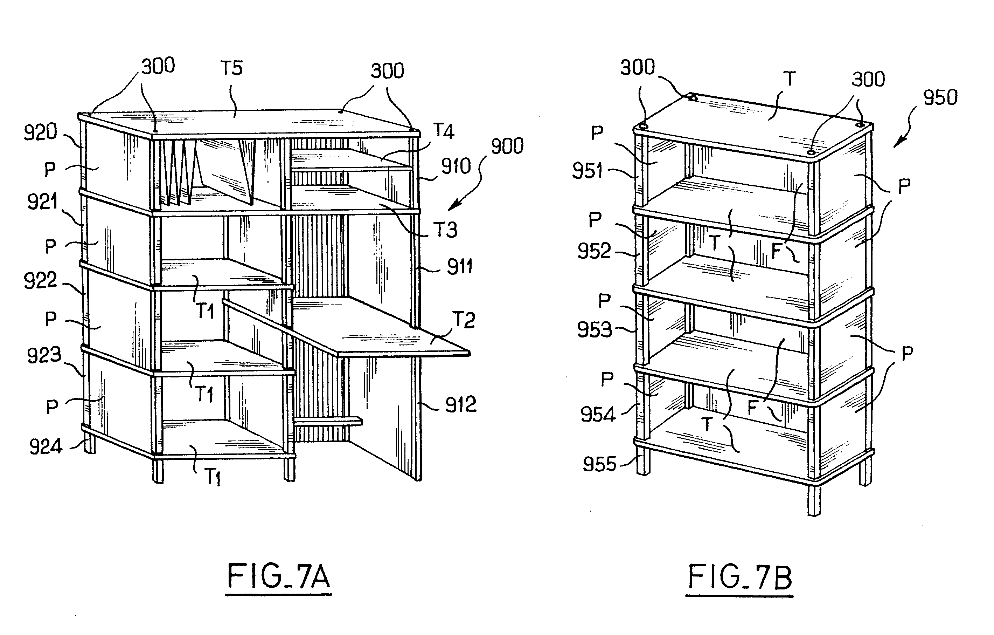

Les figures 7A et 7B illustrent deux exemples de réalisation d'éléments d'ameublement pouvant être aisément assemblés grâce au dispositif de l'invention, ce dispositif pouvant intervenir au niveau de toutes les tablettes horizontales. Ainsi, à la figure 7A, on distingue un meuble de type bureau 900, avec des parois P, et des tablettes T1, T2, T3, T4, T5. L'ossature verticale d'un tel meuble est obtenue aisément à partir de dispositifs d'assemblage conformes a l'invention, chaque assemblage réalisant les montants verticaux nécessaires. Ainsi par exemple, pour la tablette T2 formant bureau, les profilés 911 et 912 constituent un montant de maintien, le profilé 910 complétant le montant vertical complet. Sur l'autre côté du meuble 900, un montant vertical sera réalisé par assemblage des profilés 920, 921, 922, 923, 924, en reconstituant ainsi une colonne unique présentant une excellente tenue en charge. On parvient ainsi à reconstituer la hauteur du mobilier au niveau de ces montants, sans que cela nuise à la rigidité dudit montant. En outre, une telle conception permet de réaliser des colis préparés à l'avance beaucoup moins encombrants que pour des meubles analogues assemblés par les systèmes classiques précités. En effet, pour un tel meuble bureau dont la hauteur peut être de 1 650 mm, l'encombrement sera donné par la longueur de la tablette supérieure T5, soit en général 1 250 mm, alors que les techniques classiques ne permettaient pas de réaliser des colis de longueur inférieure à 1 650 mm. On notera d'ailleurs la présence des bouchons 300 au niveau de cette tablette supérieure T5.

La figure 7B illustre une autre variante d'éléments d'ameublement, avec un meuble commode 950 comportant des tablettes T, des parois P, et des fonds F. Comme précédemment, chacun des montants verticaux sera réalisé par assemblage de tronçons successifs de profilés creux, tels que 951, 952, 953, 954, 955. On retrouve là encore les bouchons 300 au niveau de la tablette supérieure. Comme précédemment, pour une commode de 1 700 mm de hauteur, comportant des tablettes de 800 mm de long et 300 mm de large, on obtiendra un colis ayant seulement 800 mm de longueur, alors que les techniques existantes ne permettaient pas de descendre en dessous d'une longueur de 1 700 mm.

Il va de soi que l'invention n'est nullement limitée aux modes de réalisation qui viennent d'être décrits, mais englobe au contraire toute variante reprenant, avec des moyens équivalents, les caractéristiques essentielles figurant aux revendications.

Ainsi par exemple, on pourra utiliser des systèmes à emboîtement conique pour provoquer une expansion radiale de l'un au moins des corps d'assemblage, ou encore des systèmes utilisant des inserts métalliques collés sur une structure moulée en matière plastique ou élastomère pour provoquer la déformation radiale désirée.

Dans le cadre d'autres applications, comme la réalisation de structures de stands, l'invention permet d'assembler également des profilés à des raccords multiples de même section, auquel cas l'entretoise du dispositif se ramène à une simple rondelle d'appui disposée entre chaque profilé et/ou branche du raccord multiple.

## Revendications

1. Dispositif d'assemblage pour éléments démontables ou modulaires, lesdits éléments étant du type comportant une ossature et au moins une entretoise maintenue par ladite ossature en étant disposée sensiblement transversalement à celle-ci, caractérisé par le fait qu'il comporte d'une part un premier corps d'assemblage (100) insérable dans un profilé creux (10) constituant une partie de l'ossature, ledit premier corps d'assemblage comprenant une portion centrale de verrouillage (101) pouvant pénétrer dans un perçage associé de l'entretoise, ainsi qu'une portion périphérique (102) se raccordant à cette portion centrale et présentant un bord libre (103) pouvant prendre appui contre une face de ladite entretoise, dans une zone entourant le perçage prévu sur celle-ci, et d'autre part un second corps d'assemblage (200) pouvant prendre appui contre la face opposée de l'entretoise, ledit second corps d'assemblage présentant une portion centrale de verrouillage (201) homologue de celle du premier corps d'assemblage (100) et pouvant pénétrer également dans ledit perçage pour constituer une liaison (107, 207) d'accouplement baïonnette à rampe inclinée, la portion périphérique (102) du premier corps d'assemblage (100) étant en outre déformable radialement vers l'extérieur sous l'effet d'une traction exercée sur la portion centrale (101) dudit premier corps d'assemblage, de telle sorte que la rotation relative des deux corps d'assemblage en vue de leur accouplement réalise une telle traction et bloque ainsi automatiquement le premier corps d'assemblage (100) dans le profilé creux associé.

2. Dispositif d'assemblage selon la revendication 1, caractérisé par le fait que la portion périphérique (102) du premier corps d'assemblage (100) comporte des facettes parallèles (104) correspondant à certaines au moins des faces internes du profilé creux associé, lesdites facettes se raccordant par une face centrale commune (105) à la portion centrale de verrouillage (101) dudit corps.

3. Dispositif d'assemblage selon la revendication 2, caractérisé par le fait que le premier corps d'assemblage (100) présente des fentes (106) facilitant sa déformation radiale sous l'effet d'une traction exercée sur la portion centrale de verrouillage (101) dudit corps.

4. Dispositif d'assemblage selon les revendications 2 et 3, caractérisé par le fait que les fentes (106) sont prévues au niveau d'arêtes de la portion périphérique (102) du corps d'assemblage, et se prolongent dans la face centrale commune (105) dudit corps.

5. Dispositif d'assemblage selon la revendication 4, caractérisé par le fait que les fentes (106) sont organisées selon des plans diagonaux parallèles à une direction commune qui correspond à l'axe central du profilé creux associé (10).

6. Dispositif d'assemblage selon l'une des revendications 1 à 5, caractérisé par le fait que la portion centrale de verrouillage (101) du premier corps d'assemblage (100) a sensiblement la forme d'une cheminée cylindrique se terminant par un moyen mâle (207) ou femelle (107) d'accouplement baïonnette à rampe inclinée.

7. Dispositif d'assemblage selon la revendication 6, caractérisé par le fait que le moyen mâle d'accouplement (207) comporte une tête transversale saillante (252), ladite tête transversale comportant au moins une facette inférieure inclinée (253) pouvant coopérer avec une rampe inclinée (108) prévue sur la portion centrale de verrouillage homologue (101).

8. Dispositif d'assemblage selon la revendication 6, caractérisé par le fait que le moyen femelle d'accouplement (107) comporte au moins une rampe inclinée (108) disposée à l'intérieur de la cheminée, ladite rampe pouvant coopérer avec la tête transversale saillante (252) prévue sur la portion centrale de verrouillage homologue (201).

9. Dispositif d'assemblage selon la revendication 8, caractérisé par le fait que la rampe inclinée (108) est délimitée par deux ergots d'encliquetage (111, 112).

10. Dispositif d'assemblage selon la revendication 8 ou 9, caractérisé par le fait que la rampe inclinée (108) est essentiellement plane, et s'étend perpendiculairement à une facette d'entrée (109) délimitant un orifice (110) prévu pour l'entrée de la tête transvesale saillante (252) de la portion centrale homologue (201).

11. Dispositif d'assemblage selon l'une des revendications 8 à 10, caractérisé par le fait que le moyen femelle d'accouplement (107) comporte deux rampes inclinées (108) se correspondant dans une symétrie par rapport à l'axe de la cheminée (101).

12. Dispositif d'assemblage selon l'une des revendications 6 à 11, caractérisé par le fait que la liaison d'accouplement baïonnette à rampe inclinée est effective après une rotation relative d'environ un quart de tour des deux corps d'assemblage (100, 200).

13. Dispositif d'assemblage selon l'une des revendications 6 à 12, caractérisé par le fait que les moyens mâle (207) et femelle (107) d'accouplement baïonnette à rampe inclinée sont en outre complétés par un moyen d'encliquetage rapide (255, 113) permettant un verrouillage provisoire par clipsage axial des deux corps d'assemblage (100, 200) avant la rotation relative desdits corps.

14. Dispositif d'assemblage selon la revendication 13, caractérisé par le fait que le moyen d'encliquetage rapide est un système à picot et cuvette, avec de préférence deux picots (255) sur la tête transversale saillante (252) du moyen mâle d'accouplement (207) et deux cuvettes (113) sur la paroi intérieure de la cheminée (101) portant le moyen femelle d'accouplement (107).

15. Dispositif d'assemblage selon l'une des revendications 1 à 14, caractérisé par le fait les premier et second corps d'assemblage (100, 200) sont de structure générale identique, et ne diffèrent essentiellement l'un de l'autre que par le moyen (107, 207) d'accouplement baïonnette à rampe inclinée.

16. Dispositif d'assemblage selon la revendication 15, caractérisé par le fait que les deux corps d'assemblage (100, 200) comportent une portion périphérique (102, 202) telle que l'on puisse utiliser un profilé creux (10) identique de part et d'autre de l'entretoise concernée.

17. Dispositif d'assemblage selon la revendication 16, caractérisé par le fait que la portion périphérique (102, 202) des corps d'assemblage (100, 200) est de section transversale sensiblement carrée ou rectangulaire.

18. Dispositif d'assemblage selon la revendication 16, associé à un profilé creux (20) présentant intérieurement intérieurement des réservations angulaires (25), caractérisé par le fait que la portion périphérique des corps d'assemblage (400) présente une section transversale complémentaire, avec des saillies angulaires (425) correspondantes.

19. Dispositif d'assemblage selon l'une des revendications 1 à 14, caractérisé par le fait que le second corps d'assemblage (300) se présente sous la forme d'un bouchon cylindrique, dont la partie principale constitue la portion centrale de verrouillage (301) se terminant par un moyen mâle ou femelle (307) d'accouplement baïonnette à rampe inclinée, la partie restante (320) étant essentiellement indéformable, et constituant à la fois un appui de butée et un cache masquant la liaison d'accouplement à baïonnette.

20. Dispositif d'assemblage selon l'une des revendications 1 à 19, caractérisé par le fait que chacun des corps d'assemblage (100, 200, 300, 400) est constitué par une pièce unique en matière plastique, de préférence moulée par injection.

<u>FIG.1</u>

FIG_2B

FIG_2A

FIG_3

FIG_4

FIG_6

FIG_5

FIG.7A

FIG.7B

EP 0 342 119 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | US-A-3 338 605 (STOEBER) <br> * colonne 4, lignes 39-49; figure 19 * <br> --- | 1,6 | F 16 B 12/40 |
| D,A | GB-A-1 402 925 (POFFERI) <br> * figure 23 * <br> --- | 1 | |
| D,A | US-A-3 869 218 (STOEBER) <br> * figure 14 * <br> --- | 1 | |
| D,A | US-A-3 661 411 (FLICK) <br> * figure 1 * <br> --- | 1 | |
| D,A | US-A-3 890 022 (MOON) <br> * figure 5 * <br> --- | 1 | |
| D,A | DE-U-8 430 322 (SCHREIBER) <br> * figure 6 * <br> ----- | 3-5 | |

**DOMAINES TECHNIQUES RECHERCHES (Int. Cl.4)**

F 16 B

Le présent rapport a été établi pour toutes les revendications

| Lieu de la recherche | Date d'achèvement de la recherche | Examinateur |
|---|---|---|
| LA HAYE | 20-06-1989 | KINZINGER J.M. |